# EUROPÄISCHE PATENTSCHRIFT

(11) **EP 3 655 674 B1**
(45) Veröffentlichungstag und Bekanntmachung des Hinweises auf die Patenterteilung: **12.05.2021**
(21) Anmeldenummer: 18745845.0
(22) Anmeldetag: 12.07.2018
(51) Int. Cl.: F16D 3/18, F16D 1/00, F16D 1/06, F16D 1/02

(54) **KUPPLUNG UND VERFAHREN ZU IHRER HERSTELLUNG**
CLUTCH AND METHOD FOR THE PRODUCTION THEREOF
EMBRAYAGE ET PROCÉDÉ POUR SA FABRICATION

(30) Priorität: 21.07.2017 DE 102017212604
(43) Veröffentlichungstag der Anmeldung: 27.05.2020
(73) Patentinhaber: KWD Kupplungswerk Dresden GmbH, 01159 Dresden (DE)
(72) Erfinder: KRONDORF, Martin, 01159 Dresden (DE); HÄHNEL, Thomas, 01723 Wilsdruff (DE)
(74) Vertreter: Rauschenbach, Marion
(86) Internationale Anmeldenummer: PCT/EP2018/068987
(87) Internationale Veröffentlichungsnummer: WO 2019/016072

(56) Entgegenhaltungen:
- WO-A1-2016/177394
- DE-A1-102005 047 305
- DE-A1-102008 052 760
- DE-A1-102014 204 590
- DE-U1-202013 010 678

## Beschreibung

Die Erfindung bezieht sich auf das Gebiet des Maschinenbaus und betrifft eine Kupplung, wie sie zur Übertragung eines Drehmomentes zwischen zwei Maschinenwellen beispielsweise als Zahnkupplung, Flanschkupplung Ringscheibenkupplung, Laschenkupplung, Ganzmetallkupplung, Membrankupplung, Lamellenkupplung, Reibungskupplungen oder Kombinationskupplungen, beispielsweise in Fahrzeugantrieben, insbesondere Schienenfahrzeugantrieben, zum Einsatz kommen kann, sowie ein Verfahren zu ihrer Herstellung.

Kupplungen sind aus dem Stand der Technik hinlänglich bekannt. Sie dienen zur Übertragung von Drehmomenten von einer Welle auf eine andere. Solche Kupplungen können beispielsweise starre oder elastische Kupplungen bzw. schaltbare oder nichtschaltbare Kupplungen sein. Auch dienen Kupplungen zu einer starren, drehstarren, elastischen, drehelastischen und/oder beweglichen Verbindung zweier Wellen, wobei durch die Kupplungen Drehmomentstöße und/oder Winkelfehler zwischen den Wellen ausgeglichen werden können.

Derartige Kupplungen werden u.a. in Antriebssträngen von Fahrzeugen, wie PKW, LKW, Nutzfahrzeugen, Bussen oder auch Schienenfahrzeugen eingesetzt. Sie sind dabei in den Triebverbindungen zwischen einem Antriebsaggregat, beispielsweise einem Motor, und einer Arbeitsmaschine direkt integriert oder können in eine solche Verbindung geschaltet werden.

Neben o.g. Erfordernissen, die derartige Kupplungen erfüllen müssen, ist es für Kupplungen erforderlich, dass die einzelnen Komponenten der Kupplungen elektrisch voneinander isoliert sind. So ist es beispielsweise bei elektrisch angetriebenen Schienenfahrzeugen notwendig, dass der elektrische Kontakt zwischen den Radsätzen und dem Fahrzeugantriebsstrang unterbrochen ist, um eine Spannungsüberschlag zu verhindern. Ein solcher Spannungsüberschlag soll grundsätzlich bei Fahrzeugen verhindert werden.

Dazu sind verschiedene Lösungen bekannt, die an wenigstens einer Stelle des Fahrzeugantriebsstranges ein Bauteil zur elektrischen Isolierung aufweisen, um die elektrische Verbindung zu unterbrechen und die Spannung gezielt abzuleiten.

So ist aus der DE 10 2014 204 590 A1 eine Zahnkupplung bekannt, mit einem mit der Antriebswelle zu verbindenden ersten Kupplungsabschnitt und einem mit der Abtriebswelle zu verbindenden zweiten Kupplungsabschnitt, wobei mindestens einer der beiden Kupplungsabschnitte eine Mitnahmeverzahnung mit einer Innenverzahnung und einer darin eingreifenden Außenverzahnung aufweist, und ein die beiden Kupplungsabschnitte miteinander verbindendes und elektrisch voneinander isolierendes Zwischenrohr aus einem elektrisch isolierenden Material. Ein solches elektrisch isolierendes Material ist vorteilhafterweise ein faserverstärkter Kunststoff.

Weiter ist aus der DE 20 2013 010 678 U1 eine Kupplung bekannt, bei der die Kupplungsnabe in ein ringartiges Naben-Innenteil zur Aufnahme zumindest einer Wellenkomponente und in ein ringartiges Naben-Außenteil mit einer von einer Innenfläche begrenzten Öffnung, in die das Naben-Innenteil eingebracht ist, geteilt ist, wobei das Naben-Innenteil eine äußere Mantelfläche aufweist, die in Verbindung mit der Innenfläche des Naben-Außenteils steht, wobei sich zwischen der äußeren Mantelfläche des Naben-Innenteils und der Innenfläche des Naben-Außenteils eine elektrische Isolationsschicht befindet, die auf dem/den Isolationsschichtträger/n in Form des Naben-Innenteils und/oder in Form des Naben-Außenteils vor einer weiteren Montage aufgebracht ist. Die Isolationsschicht besteht dabei vorteilhafterweise aus einem keramischen Material und weist eine Schichtdicke auf, die wesentlich kleiner ist, als die Dicke des Isolationsschichtträgers.

Aus der DE 10 2007 036 001 A1 ist ein elektrisch isolierendes Wellenanschlusselement bekannt, bei dem ein äußeres Wellenelement mit einer Innenöffnung, wobei in der Innenöffnung eine Innenfläche des äußeren Wellenelementes ausgebildet ist, ein inneres Wellenelement mit einer Außenfläche des inneren Wellenelements, die in die Innenöffnung des äußeren Wellenelements mittels eines Pressverbandes eingesetzt ist, die Innenfläche des äußeren Wellenelements und/oder die Außenfläche des inneren Wellenelements weisen eine elektrische Isolationsbeschichtung auf, die das äußere Wellenelement und das innere Wellenelement elektrisch gegeneinander isoliert.

Gemäß der DE 10 2013 007 126 A1 ist eine Kupplung zum Übertragen eines Drehmomentes sowie Fahrzeugantriebsstrang, insbesondere für ein Schienenfahrzeug, bekannt. Diese Kupplung umfasst eine erste Kupplungshälfte, die an einen Antrieb anschließbar ist, eine zweite Kupplungshälfte, die an eine Arbeitsmaschine anschließbar ist, wenigstens eine der Kupplungshälften ist zweigeteilt, umfassend ein erstes Teil und ein zweites Teil, die beiden Teile sind berührungsfrei zueinander angeordnet, so dass zwischen den beiden kein Stromfluss stattfindet, die beiden Teile begrenzen miteinander einen Hohlraum, der wenigstens einen elektrisch isolierenden Körper enthält, der Hohlraum und der Körper sind derart gestaltet und angeordnet, dass im Betrieb ein Drehmoment von einem Teil auf das andere Teil übertragen wird.

Ein Nachteil der Lösungen des Standes der Technik ist, dass mit den Isolationsschichten zur elektrischen Isolation zwischen Antriebs- und Abtriebsseite einer Kupplung der elektrische Kontakt nicht in ausreichendem Maße unterbrochen ist, um eine Spannungsüberschlag zu verhindern, da insbesondere die erreichbaren Kapazitäten der Isolationsschichten zu hoch sind.

Ein weiterer Nachteil besteht darin, dass die Isolationsschichten von Kupplungen des Standes der Technik oft nur inhomogene Schichten und/oder auch ungleichmäßige

Schichtdicken aufweisen, so dass diese Stellen die Bereiche mit der geringsten Isolationswirkung sind und für die elektrischen Eigenschaften der gesamten Kupplung bestimmend sind.

Von Nachteil ist auch, dass die Isolationsschichten des Standes der Technik oft in unmittelbarer Nähe der Verzahnung angeordnet sind, was insbesondere dahingehend ungünstig ist, als dass neben der gewollten elektrischen Isolation eine thermische Isolation erfolgt, die betriebsbedingt zur deutlichen Verminderung der Wärmeabgabe führt und somit in höheren Kupplungstemperaturen resultiert.

Die Aufgabe der vorliegenden Erfindung ist es, eine Kupplung anzugeben, mit der der elektrische Kontakt zwischen Antriebs- und Abtriebsseite der Kupplung sicher verhindert wird, sowie ein einfaches und kostengünstiges Verfahren zu ihrer Herstellung.

Die Aufgabe wird durch die in den Ansprüchen angegebene Erfindung gelöst. Vorteilhafte Ausgestaltungen sind Gegenstand der Unteransprüche.

Die erfindungsgemäße Kupplung besteht aus die in Anspruch 1 angegebenen Merkmale.

Vorteilhafterweise ist die Kupplung eine Zahnkupplung, Laschenkupplung, Ringscheibenkupplung, Flanschkupplung, Reibungskupplung oder Membrankupplung.

Ebenfalls vorteilhafterweise bestehen der erste Hohlzylinder und die Kupplungshälfte mindestens im Bereich der Bohrung aus einem metallischen Material.

Weiterhin vorteilhafterweise besteht der zweite Hohlzylinder aus einem Elastomer, Duromer oder Thermoplast, noch vorteilhafterweise aus Epoxidharz, Polyoxymethylen, Polyetheretherketon, Polyamid, Polyurethan oder glasfaserverstärkten Kunststoffen.

Und auch vorteilhafterweise weist das Material des zweiten Hohlzylinders eine Dielektrizitätskontante oder Permitivitätszahl von maximal 9 auf.

Vorteilhaft ist es auch, wenn der zweite Hohlzylinder eine Wanddicke von mindestens 1 mm aufweist.

Auch vorteilhaft ist es, wenn die Form der Rändelung auf den Mantelflächen des ersten Hohlzylinders und der Bohrung in der Kupplungshälfte im Wesentlichen parallel zur Rotationsachse der Antriebs- oder Abtriebswelle angeordnet ist.

Weiterhin vorteilhaft ist es, wenn die Form der Rändelung auf den Mantelflächen des ersten Hohlzylinders und der Bohrung in der Kupplungshälfte in einem Winkel zwischen 0 ° und 90 ° zur Rotationsachse der Antriebs- oder Abtriebswelle angeordnet ist.

Ebenfalls vorteilhaft ist es, wenn die Kupplungshälfte sowie die zwei Hohlzylinder untereinander und mit der Mantelinnenfläche der Bohrung einen form- und kraftschlüssigen Kontakt oder einen form- und stoffschlüssigen Kontakt oder einen form-, kraft- und stoffschlüssigen Kontakt zueinander aufweisen.

Von Vorteil ist es auch, wenn die Rändelung mindestens über den gesamten Umfang von Innen- und Außenmantelfläche von erstem Hohlzylinder und Mantelinnenfläche der Bohrung der Kupplungshälfte teilweise oder vollständig über die gesamte Höhe des Hohlzylinders und der Bohrung vorhanden ist.

Weiterhin von Vorteil ist es, wenn die Rändelung auf mindestens einer Mantelfläche gleichförmig ist.

Ebenfalls von Vorteil ist es, wenn der zweite Hohlzylinder an Innen- und/oder Außenmantelfläche teilweise oder vollständig eine Rändelung aufweist.

Und auch von Vorteil ist es, wenn die Innenmantelfläche des ersten Hohlzylinders der Form der Außenmantelfläche der Antriebs- oder Abtriebswelle entspricht und alle anderen Mantelflächen des ersten und zweiten Hohlzylinders und der Bohrung jeweils mindestens der Form der mit ihr in Kontakt befindlichen Mantelflächen entsprechen, um eine kraft-, form- oder stoffschlüssige Verbindung zu erzeugen.

Vorteilhaft ist es weiterhin, wenn die Außenmantelfläche des ersten Hohlzylinders, die Innen- und/oder Außenmantelfläche des zweiten Hohlzylinders und die Innenmantelfläche der Bohrung eine konische oder gestufte Form aufweisen und/oder der Durchmesser der Hohlzylinder und/oder der Bohrung über ihre Länge gleich oder unterschiedlich ist und der Durchmesser rund, ellipsoid oder mehreckig ist und/oder die Stirnseiten des zweiten Hohlzylinders an den Stirnseiten und/oder den Mantelflächen von erstem, inneren Hohlzylinder und Kupplungshälfte mit Bohrung enden und die elektrische Isolierung von erstem Hohlzylinder und Kupplungshälfte realisieren.

Ein Verfahren zur Herstellung einer Kupplung wird in Anspruch 13 beschrieben.

Vorteilhafterweise wird die Rändelung mittels Rändeln, Pressen, Gewindeschneiden, Drehen, Fräsen oder Prägen auf die Mantelflächen des ersten Hohlzylinders und der Bohrung in der Kupplungshälfte eingebracht.

Ebenfalls vorteilhafterweise wird das elektrisch isolierende Material des zweiten Hohlzylinders in fester, pastöser, flüssiger oder geschmolzener Form eingebracht. Weiterhin vorteilhafterweise wird als elektrisch isolierendes Material des zweiten Hohlzylinders ein Polymerwerkstoff, wie ein Elastomer, ein Duromer oder ein Thermoplast eingebracht.

Und auch vorteilhafterweise wird das Material des zweiten Hohlzylinders in den Zwischenraum zwischen innerem Hohlzylinder und Bohrung in der Kupplungshälfte eingepresst oder eingespritzt.

Mit der vorliegenden Erfindung wird eine Kupplung angegeben, mit der der elektrische Kontakt zwischen Antriebs- und Abtriebsseite der Kupplung sicher verhindert wird, sowie ein einfaches und kostengünstiges Verfahren zu ihrer Herstellung.

Erreicht wird dies durch eine Kupplung, die mindestens aus einer Kupplungshälfte auf der Antriebsseite und einer Kupplungshälfte auf der Abtriebsseite besteht. Eine solche Kupplung kann vorteilhafterweise eine Zahnkupplung, Ringscheibenkupplung, Laschenkupplung, Flanschkupplung, Membrankupplung oder Kombinationskupplung sein.

Mindestens eine Kupplungshälfte weist ausgehend von der Antriebs- oder Abtriebswelle aus, und mit dieser form-, kraft- und/oder stoffschlüssig verbunden, mindestens zwei übereinander angeordnete und form-, kraft- und/oder stoffschlüssig miteinander verbundene Hohlzylinder auf.

Unter einem Hohlzylinder soll im Rahmen der vorliegenden Erfindung grundsätzlich ein gerader Kreiszylinder verstanden werden, der eine Bohrung entlang seiner Achse aufweist.

Dabei können die Mantelflächen der Hohlzylinder in ihrer äußeren Form unterschiedlich ausgebildet sein. Die Innen- und/oder Außenmantelflächen der Hohlzylinder können beispielsweise eine konische oder gestufte Form aufweisen und auch der innere und/oder äußere Durchmesser der Hohlzylinder kann über ihre Länge gleich oder unterschiedlich groß sein, und ebenso kann die Form des Durchmessers rund, ellipsoid oder mehreckig und sich über die Länge der Hohlzylinder ändern.

Es ist weiter möglich, dass der zweite Hohlzylinder nicht nur stirnseitig, sondern auch im Bereich der Mantelflächen die elektrische Isolierung von innerem, ersten Hohlzylinder und Kupplungshälfte realisiert, also beispielsweise in abgewinkelter Form vorliegt, so dass die äußere Mantelfläche der Kupplungshälfte teilweise das Material der Kupplungshälfte, das Material des zweiten Hohlzylinders und das Material des ersten, inneren Hohlzylinders aufweist.

Unabhängig von Form, Wanddicke und Material des zweiten Hohlzylinders muss erfindungsgemäß realisiert werden, dass eine vollständige elektrische Isolation von erstem, inneren Hohlzylinder und Kupplungshälfte mit der Bohrung realisiert wird.

Lediglich festgelegt ist die Form der Innenmantelfläche des ersten, inneren Zylinders, der der Form der Antriebs- oder Abtriebswelle in dem Bereich, in dem sie miteinander form-, kraft- und/oder stoffschlüssig miteinander verbunden werden, entsprechen muss.

Die zwei Hohlzylinder sind direkt übereinander angeordnet, so dass der erste, innere Hohlzylinder den geringsten inneren Durchmesser aufweist, der dem Durchmesser der Antriebs- oder Abtriebswelle entspricht. Der zweite, mittlere Hohlzylinder weist einen inneren Durchmesser auf, der dem äußeren Durchmesser des ersten, inneren Hohlzylinders entspricht.

Der mittlere, zweite Hohlzylinder ist in einer Bohrung der Kupplungshälfte angeordnet, die im Wesentlichen parallel zur Rotationsachse der Antriebs- oder Abtriebswelle in der Kupplungshälfte angeordnet ist.

Dabei entspricht der äußere Durchmesse des zweiten, mittleren Hohlzylinders dem inneren Durchmesser der Bohrung.

Weiter bestehen der erste Hohlzylinder und die Kupplungshälfte mindestens im Bereich der Bohrung aus elektrisch leitendem Material und der zweite Hohlzylinder aus elektrisch isolierendem Material.

Als elektrisch leitendes Material ist im Wesentlichen metallisches Material vorhanden.

Als elektrisch isolierendes Material sind Polymerwerkstoffe, wie Elastomere, Duromere und/oder Thermoplaste, vorhanden. Derartige Polymerwerkstoffe bestehen vorteilhafterweise aus Epoxidharz, Polyoxymethylen (POM), Polyetheretherketon (PEEK), Polyamid (PA), Polyurethan (PU) oder sind glasfaserverstärkte Kunststoffe.

Weiter weist mindestens der erste Hohlzylinder mindestens an seiner Außenmantelfläche, auf der der Antriebs- oder Abtriebswelle abgewandten Seite mindestens teilweise eine Rändelung auf und mindestens die Bohrung an ihrer Innenmantelfläche, die zur Antriebs- oder Abtriebswelle hingewandt ist, ebenfalls mindestens teilweise eine Rändelung auf.

Unter einer Rändelung soll im Rahmen der vorliegenden Erfindung eine mittels Rändeln, Pressen, Gewindeschneiden, Drehen, Fräsen oder Prägen hergestellte umlaufende Gestaltabweichung der Oberfläche verstanden werden, die in einen metallenen Rotationskörper eingeprägt worden ist.

Die Form der Rändelung auf den Mantelflächen des ersten Hohlzylinders und der Bohrung ist dabei vorteilhafterweise im Wesentlichen parallel oder in einem Winkel zwischen 0 ° und 90 ° zur Rotationsachse der Antriebs- oder Abtriebswelle angeordnet.

Ebenso ist vorteilhafterweise die Rändelung mindestens über den gesamten Umfang der Außenmantelfläche des ersten Hohlzylinder und der Innenmantelfläche der Bohrung teilweise oder vollständig über die gesamte Höhe der Hohlzylinder und der Bohrung vorhanden.

Auch ist eine gleichförmige Rändelung auf einer Mantelfläche vorteilhaft.

Es kann auch vorteilhaft sein, wenn auch der zweite Hohlzylinder an Innen- und/oder Außenmantelfläche teilweise oder vollständig eine Rändelung aufweist.

Weiter weist der zweite Hohlzylinder einen im Wesentlichen vollständigen mindestens formschlüssigen Kontakt mindestens über den gesamten Umfang mit der Außenmantelfläche des ersten und der Innenmantelfläche der Bohrung auf. Dabei weisen die zwei Hohlzylinder untereinander und auch zu der Bohrung vorteilhafterweise einen form- und kraftschlüssigen Kontakt oder einen form- und stoffschlüssigen Kontakt oder einen form-, kraft- und stoffschlüssigen Kontakt auf.

In jedem Fall muss gesichert sein, dass die Übertragung eines Drehmomentes zwischen den zwei Wellen durch die Kupplung und auch durch die Verbindung der beiden Hohlzylinder untereinander und mit der Kupplungshälfte über die Bohrung sowie mit der Welle realisiert wird.

Unter Kraftschluss soll im Rahmen der vorliegenden Erfindung eine kraftschlüssige Verbindung verstanden werden, bei der eine Normal-Kraft auf die miteinander zu verbindenden Flächen ausgeübt wird und dabei die gegenseitige Verschiebung der zu verbindenden Flächen aufgrund der Reibung verhindert wird.

Unter Formschluss soll im Rahmen der vorliegenden Erfindung eine formschlüssige Verbindung verstanden werden, bei der durch das mechanische Ineinandergreifen von mindestens zwei Verbindungspartnern eine Kraftübertragung aufgrund einer geometrisch passgenauen Ausformung der Verbindungspartner ermöglicht wird. Ein Lösen der Verbindungspartner kann auch ohne oder bei unterbrochener Kraftübertragung nicht erfolgen.

Unter Stoffschluss soll im Rahmen der vorliegenden Erfindung eine stoffschlüssige Verbindung verstanden werden, bei der die Verbindungspartner durch atomare oder molekulare Kräfte zusammengehalten werden, wobei die stoffschlüssige Verbindung eine nicht lösbare Verbindung ist, die sich nur durch Zerstörung der Verbindungsmittel trennen läßt.

Vorteilhaft ist es weiter, wenn das elektrisch isolierende Material mit einer Dielektrizitätskonstante oder Permitivitätszahl von maximal 9 ausgewählt wird.

Die elektrische Kapazität zwischen zwei voneinander isolierten elektrisch leitenden Körpern wird durch die Dielektrizitätskonstante des isolierenden Mediums sowie die Geometrie der elektrisch leitenden Körper festgelegt.

Die Permittivität *ε*, auch dielektrische Leitfähigkeit oder dielektrische Funktion genannt, gibt in der Elektrodynamik und auch in der Elektrostatik die Durchlässigkeit eines bestimmten Materials für elektrische Felder an.

Bei Vorliegen einer zu geringen Wanddicke des mittleren, zweiten Hohlkörpers wird keine ausreichend niedrige Kapazität des elektrisch leitenden Hohlzylinders und der Kupplungshälfte erreicht, um einen elektrischen Kontakt zwischen Antriebs- und Abtriebsseite der Kupplung und eine Spannungsüberschlag sicher zu verhindern.

Weiterhin wird durch den elektrischen Widerstand des elektrisch isolierenden Materials der Stromfluss unterbunden. Der elektrische Widerstand in der Elektrotechnik ist ein Maß für die elektrische Spannung die erforderlich ist, um eine bestimmte elektrische Stromstärke durch einen elektrischen Leiter (Bauelement, Stromkreis) fließen zu lassen. Im Falle der erfindungsgemäßen Lösung im Hinblick auf das elektrisch isolierende Material soll der spezifische Durchgangswiderstand > 1*10¹⁰ Ωcm betragen.

Hergestellt wird die erfindungsgemäße Kupplung erfindungsgemäß durch ein Verfahren, bei dem mindestens zwei Kupplungshälften hergestellt werden und mindestens eine Kupplungshälfte mindestens aus zwei übereinander angeordneten Hohlzylindern in einer Bohrung einer Kupplungshälfte hergestellt wird.

Dabei werden zuerst der erste, innere Hohlzylinder und die zweite Kupplungshälfte mindestens im Bereich der Bohrung aus einem elektrisch leitenden Material hergestellt.

Anschließend werden mindestens die Außenmantelfläche des inneren Hohlzylinders und die Innenmantelfläche der Bohrung mit einer Rändelung versehen.

Die Rändelung kann vorteilhafterweise mittels Rändeln, Pressen, Gewindeschneiden, Drehen, Fräsen oder Prägen auf die Mantelflächen des ersten Hohlzylinders und der Bohrung eingebracht werden.

Nachfolgend wird der zweite, mittlere Hohlzylinder aus einem elektrisch isolierenden Material in den Zwischenraum zwischen innerem Hohlzylinder und Bohrung in der Kupplungshälfte mit im Wesentlichen vollständigem mindestens formschlüssigem Kontakt eingebracht.

Als elektrisch isolierendes Material des zweiten Hohlzylinders kann vorteilhafterweise ein Polymerwerkstoff, wie ein Elastomer, ein Duromer oder ein Thermoplast, eingebracht werden.

Dabei kann das elektrisch isolierende Material des zweiten Hohlzylinders in fester, pastöser, flüssiger oder geschmolzener Form eingebracht werden. Das Einbringen kann vorteilhafterweise durch Einpressen oder Einspritzen erfolgen.

Ein weiterer Vorteil der erfindungsgemäßen Lösungen, dass insbesondere bei Zahnkupplung die bisher im Stand der Technik realisierte Anordnung der elektrischen Isolierung mit der erfindungsgemäßen Lösung verbessert.

Hinzu kommt, dass durch die erfindungsgemäße Lösung keinerlei nicht funktionell notwendige Hohlräume realisiert werden, wodurch die sichere Übertragung eines Drehmomentes zwischen zwei Maschinenwellen realisiert wird.

Weiter kann erfindungsgemäß das kostenaufwändige Aufbringen von teuren keramischen oder anderen elektrisch isolierenden Schichten auf Teilen der Kupplung vermieden werden und erfindungsgemäß eine gleichmäßige und gleichförmige Einbringung eines elektrisch isolierenden Materials realisiert werden.

Mit der erfindungsgemäßen Lösung wird weiterhin der Vorteil erreicht, dass die Hohlzylinder aus dem elektrisch isolierenden Material sehr homogene Schichten und gleichmäßige Schichtdicken ausbilden, so dass die elektrischen Eigenschaften der gesamten Kupplung an allen Stellen gleich und gleich gut sind.

Ein weiterer Vorteil der erfindungsgemäßen Lösung besteht darin, dass der Hohlzylinder aus dem elektrisch isolierenden Material an einer Stelle innerhalb einer oder mehrerer Kupplungshälften positioniert ist, der andere Kupplungsteile weder in ihre Funktion noch in ihrer Wirkung einschränkt. So kann der Hohlzylinder aus dem elektrisch isolierenden Material auch in deutlicher Entfernung von beispielsweise einer Verzahnung einer Zahnkupplung angeordnet werden, was insbesondere dahingehend günstig ist, dass neben der gewollten elektrischen Isolation eine thermische Isolation weitgehend verhindert wird, was die Wärmeabgabe nicht behindert und damit die Kupplungstemperaturen nicht erhöht.

Nachfolgend wird die Erfindung an einem Ausführungsbeispiel näher erläutert.

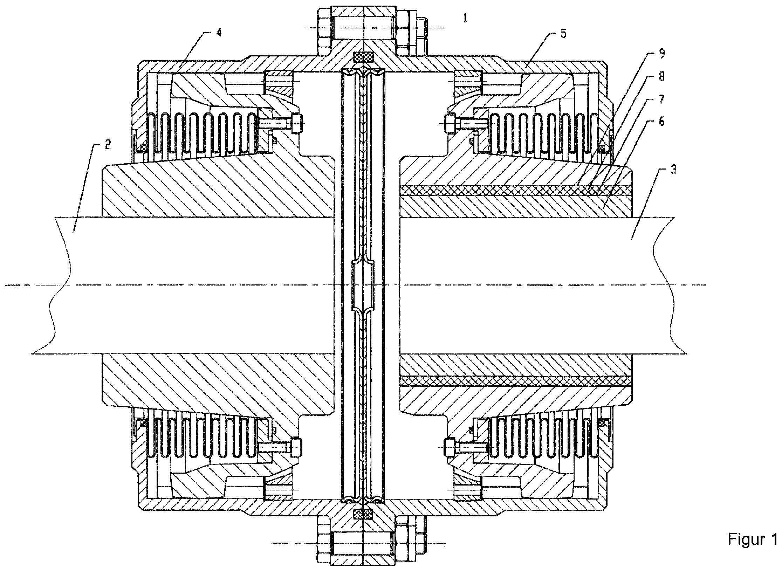

Dabei zeigt
- Fig. 1: eine erfindungsgemäße Kupplung

### Beispiel 1

Eine Zahnkupplung 1, die zur Verbindung einer Antriebs- und Abtriebswelle 2,3 dient. Die Antriebswelle 2 kann beispielsweise eine Motorwelle und die Abtriebswelle 3 eine Getriebewelle für ein Fahrzeug sein. Die Zahnkupplung 1 besteht im Wesentlichen aus zwei Kupplungshälften 4,5, eine auf der Antriebsseite 2 und die andere auf der Abtriebsseite 3.

Die Kupplungshälfte 4 auf der Antriebsseite 2 ist unverändert gegenüber Zahnkupplungen nach dem Stand der Technik. Die Kupplungshälfte 5 auf der Abtriebsseite 3 weist den erfindungsgemäßen Aufbau auf.

Der erste, innere Hohlzylinder 6 aus Stahl weist einen Innendurchmesser auf, der dem Außendurchmesser der Abtriebswelle 3 entspricht.

Die Wanddicke des ersten Hohlzylinders 6 beträgt 14 mm und die Länge 65 mm. Auf der gesamten Außenmantelfläche des ersten Hohlzylinders 6 ist eine Rändelung 7 in Form von Rippen mittels Rändeln eingebracht, die parallel zur Rotationsachse der Abtriebswelle 3 angeordnet sind. Die parallel zueinander angeordneten Rippen weisen eine Höhe von 0,6 mm und einen Abstand zueinander von 0,6 mm auf.

Um den ersten Hohlzylinder 6 wird eine Bohrung der Kupplungshälfte 5 der Zahnkupplung 1 angeordnet, die rotationssymmetrisch mit der Abtriebswelle 3 in die Kupplungshälfte 5 eingebracht worden ist. Der Durchmesser der Bohrung ist um 5 mm größer als der Außendurchmesser des ersten Hohlzylinders 6.

Die Kupplungshälfte 5 im Bereich der Bohrung ist ebenfalls aus Stahl gefertigt. Die Bohrung weist auf der gesamten Innenmantelfläche eine Rändelung 9 auf, die die Form von Rippen aufweist. Die Rippen sind parallel zueinander sowie parallel zur Rotationsachse der Abtriebswelle 3 angeordnet.

Der erste Hohlzylinder 6 wird in der Bohrung auf einer Unterlage unter Einhaltung des Abstandes von umlaufend 5 mm befestigt und in den Zwischenraum zwischen erstem Hohlzylinder 6 und Bohrung wird ein pastöses Epoxidharz bei einer Temperatur von 120 °C einspritzt und der Zwischenraum vollständig gefüllt. Nach dem Aushärten des Epoxidharzes werden mögliche überstehende Teile des Harzes entfernt. Das ausgehärtete Epoxidharz bildet den zweiten Hohlzylinder 8. Die Wanddicke des zweiten Hohlzylinders 8 beträgt 5 mm. Die Dielektrizitätskonstante des Epoxidharzes beträgt 4,3.

Nachfolgend werden weitere Teile der Zahnkupplung 1 montiert und die Kupplung fertiggestellt.

Die erfindungsgemäße Zahnkupplung 1 verhindert den elektrischen Kontakt zwischen Antriebs- und Abtriebsseite der Kupplung sicher, und ist einfach und kostengünstig herstellbar.

### Bezugszeichenliste

- 1: Kupplung
- 2: Antriebswelle
- 3: Abtriebswelle
- 4: erste Kupplungshälfte auf der Antriebsseite
- 5: zweite Kupplungshälfte auf der Abtriebsseite
- 6: erste Hohlzylinder
- 7: Rändelung am inneren Hohlzylinder
- 8: zweiter Hohlzylinder
- 9: Rändelung am zweiten Hohlzylinder

## Patentansprüche

1. Kupplung (1), mindestens bestehend aus einer ersten Kupplungshälfte (4) auf der Antriebsseite und einer zweiten Kupplungshälfte (5) auf der Abtriebsseite, wobei mindestens die zweite Kupplungshälfte (5), ausgehend von Antriebs- oder Abtriebswelle (2, 3) und mit diesen form-, kraft- und/oder stoffschlüssig verbunden, mindestens zwei übereinander angeordnete und form-, kraft- und/oder stoffschlüssig miteinander verbundene Hohlzylinder (6, 8) aufweist, die in einer Bohrung der zweiten Kupplungshälfte (5) angeordnet sind, die parallel zur Rotationsachse der Antriebs- oder Abtriebswelle (2, 3) in der zweiten Kupplungshälfte (5) angeordnet ist, **dadurch gekennzeichnet, dass**
der erste Hohlzylinder (6) und die zweite Kupplungshälfte (5) mindestens im Bereich der Bohrung aus elektrisch leitendem Material und der zweite Hohlzylinder (8) aus elektrisch isolierendem Material besteht, und wobei mindestens der erste Hohlzylinder (6) mindestens an seiner Außenmantelfläche auf der der Antriebs- oder Abtriebswelle (2, 3) abgewandten Seite mindestens teilweise eine Rändelung (7) aufweist und mindestens die Innenmantelfläche der zweiten Kupplungshälfte (5) im Bereich der Bohrung mindestens teilweise eine Rändelung (9) aufweist, und wobei der zweite Hohlzylinder (8)
einen vollständigen mindestens formschlüssigen Kontakt mindestens über den gesamten Umfang mit der Außenmantelfläche des ersten Hohlzylinders (6) und der Innenmantelfläche der zweiten Kupplungshälfte (5) aufweist.

2. Kupplung nach Anspruch 1, bei der die Kupplung (1) eine Zahnkupplung, Laschenkupplung, Ringscheibenkupplung, Flanschkupplung, Reibungskupplung oder Membrankupplung ist.

3. Kupplung nach Anspruch 1, bei der der erste Hohlzylinder (6) und die zweite Kupplungshälfte (5) mindestens im Bereich der Bohrung aus einem metallischen Material bestehen.

4. Kupplung nach Anspruch 1, bei der der zweite Hohlzylinder (8) aus einem Elastomer, Duromer oder Thermoplast besteht, vorteilhafterweise aus Epoxidharz, Polyoxymethylen, Polyetheretherketon, Polyamid, Polyurethan oder glasfaserverstärkten Kunststoffen.

5. Kupplung nach Anspruch 1, bei der das Material des zweiten Hohlzylinders (8) eine Dielektrizitätskontante oder Permitivitätszahl von maximal 9 aufweist.

6. Kupplung nach Anspruch 1, bei der der zweite Hohlzylinder (8) eine Wanddicke von mindestens 1 mm aufweist.

7. Kupplung nach Anspruch 1, bei der die Form der Rändelung (7, 9) auf den Mantelflächen des ersten Hohlzylinders (6) und der zweiten Kupplungshälfte (5) parallel zur Rotationsachse der Antriebs- oder Abtriebswelle (2, 3) angeordnet ist oder die Form der Rändelung (7, 9) auf den Mantelflächen des ersten Hohlzylinders (6) und der zweiten Kupplungshälfte (5) in einem Winkel zwischen 0 ° und 90 ° zur Rotationsachse der Antriebs- oder Abtriebswelle (2, 3) angeordnet ist.

8. Kupplung nach Anspruch 1, bei der die zweite Kupplungshälfte (5) sowie die zwei Hohlzylinder (6, 8) untereinander und mit der Mantelinnenfläche der zweiten Kupplungshälfte (5) einen form- und kraftschlüssigen Kontakt oder einen form- und stoffschlüssigen Kontakt oder einen form-, kraft- und stoffschlüssigen Kontakt zueinander aufweisen.

9. Kupplung nach Anspruch 1, bei der die Rändelung (7, 9) mindestens über den gesamten Umfang von Innen- und Außenmantelfläche von erstem Hohlzylinder (6) und Mantelinnenfläche der zweiten Kupplungshälfte (5) teilweise oder vollständig über die gesamte Höhe des Hohlzylinders und der Bohrung der zweiten Kupplungshälfte (5) vorhanden ist oder die Rändelung (7, 9) auf mindestens einer Mantelfläche gleichförmig ist.

10. Kupplung nach Anspruch 1, bei der der zweite Hohlzylinder (8) an Innen- und/oder Außenmantelfläche teilweise oder vollständig eine Rändelung (7, 9) aufweist.

11. Kupplung nach Anspruch 1, bei der die Innenmantelfläche des ersten Hohlzylinders (6) der Form der Außenmantelfläche der Antriebs- oder Abtriebswelle (2, 3) entspricht und alle anderen Mantelflächen des ersten und zweiten Hohlzylinders (6, 8) und der zweiten Kupplungshälfte (5) jeweils mindestens der Form der mit ihr in Kontakt befindlichen Mantelflächen entsprechen, um eine kraft-, form- oder stoffschlüssige Verbindung zu erzeugen.

12. Kupplung nach Anspruch 1, bei der die Außenmantelfläche des ersten (6) Hohlzylinders, die Innen- und/oder Außenmantelfläche des zweiten Hohlzylinders (8) und die Innenmantelfläche der zweiten Kupplungshälfte (5) eine konische oder gestufte Form aufweisen und/oder der Durchmesser der Hohlzylinder (6, 8) und/oder der Bohrung der zweiten Kupplungshälfte (5) über ihre Länge gleich oder unterschiedlich ist und der Durchmesser rund, ellipsoid oder mehreckig ist und/oder die Stirnseiten des zweiten Hohlzylinders (8) an den Stirnseiten und/oder den Mantelflächen von erstem Hohlzylinder (6) und zweiter Kupplungshälfte (5)) mit Bohrung enden und die elektrische Isolierung von erstem Hohlzylinder (6) und zweiter Kupplungshälfte (5) realisieren.

13. Verfahren zur Herstellung einer Kupplung (1) nach einem der vorhergehenden Ansprüchen, bei dem mindestens zwei Kupplungshälften (4, 5) hergestellt werden und mindestens eine zweite Kupplungshälfte (5) mindestens aus zwei übereinander angeordneten Hohlzylindern (6, 8) hergestellt wird, wobei zuerst der erste Hohlzylinder (6) und die zweite Kupplungshälfte (5) aus einem elektrisch leitenden Material hergestellt werden, dann einen Bohrung in die zweite Kupplungshälfte (5) eingebracht wird, die eine parallele Anordnung der zweiten Kupplungshälfte (5) zur Rotationsachse der Antriebs- oder Abtriebswelle (2, 3) realisiert, mindestens die Außenmantelfläche des ersten Hohlzylinders (6) und die Innenmantelfläche der zweiten Kupplungshälfte (5) im Bereich der Bohrung mit
einer Rändelung (7,9)
versehen werden und nachfolgend der zweite Hohlzylinder (8) aus einem elektrisch isolierenden Material in den Zwischenraum zwischen erstem Hohlzylinder (6) und Bohrung in der zweiten Kupplungshälfte (5) mit vollständigem mindestens formschlüssigem Kontakt eingebracht wird.

14. Verfahren nach Anspruch 13, bei dem die Rändelung (7, 9) mittels Rändeln, Pressen, Gewindeschneiden, Drehen, Fräsen oder Prägen auf die Mantelflächen des ersten Hohlzylinders (6) und der zweiten Kupplungshälfte (5) eingebracht wird.

15. Verfahren nach Anspruch 13, bei dem das elektrisch isolierende Material des zweiten Hohlzylinders (8) in fester, pastöser, flüssiger oder geschmolzener Form eingebracht wird oder bei dem als elektrisch isolierendes Material des zweiten Hohlzylinders (8) ein Polymerwerkstoff, wie ein Elastomer, ein Duromer oder ein Thermoplast eingebracht wird.

16. Verfahren nach Anspruch 13, bei dem das Material des zweiten Hohlzylinders (8) in den Zwischenraum zwischen zweitem Hohlzylinder (8) und zweiter Kupplungshälfte (5) eingepresst oder eingespritzt wird.

## Claims

1. Coupling (1), at least consisting of a first coupling half (4) on the drive side and a second coupling half (5) on the output side, at least the second coupling half (5) having, starting from the drive or output shaft (2, 3) and being connected thereto in a positively locking, non-positive and/or integrally joined manner, at least two hollow cylinders (6, 8) which are arranged above one another, are connected to one another in a positively locking, non-positive and/or integrally joined manner, and are arranged in a bore of the second coupling half (5) which is arranged parallel to the rotational axis of the drive or output shaft (2, 3) in the second coupling half (5), **characterized in that**, at least in the region of the bore, the first hollow cylinder (6) and the second coupling half (5) consist of electrically conducting material, and the second hollow cylinder (8) consists of electrically insulating material, and at least the first hollow cylinder (6) having at least partially a knurled portion (7) at least on its outer circumferential face on the side which faces away from the drive or output shaft (2, 3), and at least the inner circumferential face of the second coupling half (5) having at least partially a knurled portion (9) in the region of the bore, and the second hollow cylinder (8) having a complete at least positively locking contact at least over the entire circumference with the outer circumferential face of the first hollow cylinder (6) and the inner circumferential face of the second coupling half (5) .

2. Coupling according to Claim 1, in the case of which the coupling (1) is a gear coupling, plate coupling, annular disc coupling, flange coupling, friction coupling or diaphragm coupling.

3. Coupling according to Claim 1, in the case of which the first hollow cylinder (6) and the second coupling half (5) consist of a metallic material at least in the region of the bore.

4. Coupling according to Claim 1, in the case of which the second hollow cylinder (8) consists of an elastomer, thermoset or thermoplastic, advantageously of an epoxy resin, polyoxymethylene, polyether ether ketone, polyamide, polyurethane or glass fibre-reinforced plastics.

5. Coupling according to Claim 1, in the case of which the material of the second hollow cylinder (8) has a dielectric constant or permittivity of at most 9.

6. Coupling according to Claim 1, in the case of which the second hollow cylinder (8) has a wall thickness of at least 1 mm.

7. Coupling according to Claim 1, in the case of which the form of the knurled portion (7, 9) is arranged on the circumferential faces of the first hollow cylinder (6) and the second coupling half (5) parallel to the rotational axis of the drive or output shaft (2, 3), or the form of the knurled portion (7, 9) is arranged on the circumferential faces of the first hollow cylinder (6) and the second coupling half (5) at an angle of between 0° and 90° with respect to the rotational axis of the drive or output shaft (2, 3).

8. Coupling according to Claim 1, in the case of which the second coupling half (5) and the two hollow cylinders (6, 8) have, among one another and with the circumferential inner face of the second coupling half (5), a positively locking and non-positive contact or a positively locking and integrally joined contact or a positively locking, non-positive and integrally joined contact with respect to one another.

9. Coupling according to Claim 1, in the case of which the knurled portion (7, 9) is present at least over the entire circumference of the inner and outer circumferential face of the first hollow cylinder (6) and the circumferential inner face of the second coupling half (5) partially or completely over the entire height of the hollow cylinder and the bore of the second coupling half (5), or the knurled portion (7, 9) is homogeneous on at least one circumferential face.

10. Coupling according to Claim 1, in the case of which the second hollow cylinder (8) has partially or completely a knurled portion (7, 9) on the inner and/or outer circumferential face.

11. Coupling according to Claim 1, in the case of which the inner circumferential face of the first hollow cylinder (6) corresponds to the form of the outer circumferential face of the drive or output shaft (2, 3), and all the other circumferential faces of the first and second hollow cylinder (6, 8) and the second coupling half (5) in each case correspond at least to the form of the circumferential faces which are in contact with it, in order to produce a non-positive, positively locking or integrally joined connection.

12. Coupling according to Claim 1, in the case of which the outer circumferential face of the first hollow cylinder (6), the inner and/or outer circumferential face of the second hollow cylinder (8) and the inner circumferential face of the second coupling half (5) have a conical or stepped form, and/or the diameter of the hollow cylinders (6, 8) and/or of the bore of the second coupling half (5) is identical or different over the length thereof, and the diameter is round, ellipsoid or polygonal, and/or the end sides of the second hollow cylinder (8) end at the end sides and/or the circumferential faces of the first hollow cylinder (6) and the second coupling half (5) with a bore, and realise the electric insulation of the first hollow cylinder (6) and the second coupling half (5).

13. Method for producing a coupling (1) according to one of the preceding claims, in the case of which method at least two coupling halves (4, 5) are produced, and at least one second coupling half (5) is produced at least from two hollow cylinders (6, 8) which are arranged above one another, the first hollow cylinder (6) and the second coupling half (5) first of all being produced from an electrically conducting material, a bore then being made in the second coupling half (5), which bore realises a parallel arrangement of the second coupling half (5) with respect to the rotational axis of the drive or output shaft (2, 3), at least the outer circumferential face of the first hollow cylinder (6) and the inner circumferential face of the second coupling half (5) being provided with a knurled portion (7, 9) in the region of the bore, and subsequently the second hollow cylinder (8) made from an electrically insulating material being introduced into the intermediate space between the first hollow cylinder (6) and the bore in the second coupling half (5) with a complete, at least positively locking contact.

14. Method according to Claim 13, in the case of which the knurled portion (7, 9) is made on the circumferential faces of the first hollow cylinder (6) and the second coupling half (5) by means of knurling, pressing, reaming, turning, milling or stamping.

15. Method according to Claim 13, in the case of which the electrically insulating material of the second hollow cylinder (8) is introduced in a solid, pasty, liquid or molten form, or in the case of which a polymer material, such as an elastomer, a thermoset or a thermoplastic, is introduced as electrically insulating material of the second hollow cylinder (8).

16. Method according to Claim 13, in the case of which the material of the second hollow cylinder (8) is pressed or sprayed into the intermediate space between the second hollow cylinder (8) and the second coupling half (5).

## Revendications

1. Embrayage (1), comprenant au moins une première moitié d'embrayage (4) du côté entraînement et une deuxième moitié d'embrayage (5) du côté sortie, au moins la deuxième moitié d'embrayage (5) comportant, à partir de l'arbre d'entraînement ou de sortie (2, 3) et étant reliée à ceux-ci par une liaison par complémentarité de formes, une liaison de friction et/ou une liaison de matière, au moins deux cylindres creux (6, 8) qui sont superposés, qui sont reliés l'un à l'autre par une liaison par complémentarité de formes, une liaison de friction et/ou une liaison de matière et qui sont disposés dans un alésage de la deuxième moitié d'embrayage (5) qui est disposé parallèlement à l'axe de rotation de l'arbre d'entraînement ou de sortie (2, 3) dans la deuxième moitié d'embrayage (5), **caractérisé en ce que** le premier cylindre creux (6) et la deuxième moitié d'embrayage (5) sont en une matière électriquement conductrice au moins dans la région de l'alésage et le deuxième cylindre creux (8) est en une matière électriquement isolante, et au moins le premier cylindre creux (6) comportant au moins partiellement un moletage (7) au moins sur sa surface latérale extérieure du côté opposé à l'arbre d'entraînement ou de sortie (2, 3) et au moins la surface latérale intérieure de la deuxième moitié d'embrayage (5) comportant au moins partiellement un moletage (9) dans la région de l'alésage, et le deuxième cylindre creux (8) comportant au moins sur toute la périphérie un contact complet, au moins par complémentarité de formes, avec la surface latérale extérieure du premier cylindre creux (6) et la surface latérale intérieure de la deuxième moitié d'embrayage (5).

2. Embrayage selon la revendication 1, l'embrayage (1) étant un embrayage à dents, un embrayage à patte, un embrayage à disque annulaire, un embrayage à bride, un embrayage à friction ou un embrayage à diaphragme.

3. Embrayage selon la revendication 1, le premier cylindre creux (6) et la deuxième moitié d'embrayage (5) étant en une matière métallique au moins dans la région de l'alésage.

4. Embrayage selon la revendication 1, le deuxième cylindre creux (8) étant en élastomère, matière thermodurcissable ou matière thermoplastique, avantageusement en résine époxy, polyoxyméthylène, polyétheréthercétone, polyamide, polyuréthane ou matière synthétique renforcée de fibres de verre.

5. Embrayage selon la revendication 1, la matière du deuxième cylindre creux (8) ayant une constante diélectrique maximale ou une permittivité maximale de 9.

6. Embrayage selon la revendication 1, le deuxième cylindre creux (8) ayant une épaisseur de paroi d'au moins 1 mm.

7. Embrayage selon la revendication 1, la forme du moletage {7, 9) étant disposée sur les surfaces latérales du premier cylindre creux (6) et de la deuxième moitié d'embrayage (5) parallèlement à l'axe de rotation de l'arbre d'entraînement ou de sortie (2, 3) ou la forme du moletage (7, 9) étant disposée sur les surfaces latérales du premier cylindre creux (6) et de la deuxième moitié d'embrayage (5) suivant un angle compris entre 0° et 90° par rapport à l'axe de rotation de l'arbre d'entraînement ou de sortie (2, 3).

8. Embrayage selon la revendication 1, la deuxième moitié d'embrayage (5) et les deux cylindres creux (6, 8) présentant l'un avec l'autre et avec la surface latérale intérieure de la deuxième moitié d'embrayage (5) un contact par liaison à complémentarité de formes et à friction et l'un avec l'autre un contact par liaison à complémentarité de formes et de matière ou un contact par liaison à complémentarité de formes, à friction et de matière.

9. Embrayage selon la revendication 1, le moletage (7, 9) étant présent au moins sur toute la périphérie de la surface latérale intérieure et de la surface latérale extérieure du premier cylindre creux (6) et de la surface latérale intérieure de la deuxième moitié d'embrayage (5) partiellement ou totalement sur toute la hauteur du cylindre creux et de l'alésage de la deuxième moitié d'embrayage (5) ou le moletage (7, 9) étant uniforme sur au moins une surface latérale.

10. Embrayage selon la revendication 1, le deuxième cylindre creux (8) comporte un moletage (7, 9) partiellement ou totalement sur la surface latérale intérieure et/ou la surface latérale extérieure.

11. Embrayage selon la revendication 1, la surface latérale intérieure du premier cylindre creux (6) correspondant à la forme de la surface latérale extérieure de l'arbre d'entraînement ou de sortie (2, 3} et toutes les autres surfaces du premier et du deuxième cylindre creux {6, 8) et de la deuxième moitié d'embrayage (5) correspondant chacune au moins à la forme des surfaces latérales en contact avec elles afin de réaliser une liaison par complémentarité de formes, une liaison par friction ou une liaison de matière.

12. Embrayage selon la revendication 1, la surface latérale extérieure du premier cylindre creux (6), la surface latérale intérieure et/ou la surface latérale extérieure du deuxième cylindre creux (8) et la surface latérale intérieure de la deuxième moitié d'embrayage (5) ayant une forme conique ou étagée et/ou le diamètre du cylindre creux (6, 8) et/ou de l'alésage de la deuxième moitié d'embrayage (5) étant le même ou étant différent sur sa longueur et le diamètre étant rond, ellipsoïdal ou polygonal et/ou les faces d'extrémité du deuxième cylindre creux (8) au niveau des faces d'extrémité et/ou des surfaces latérales du premier cylindre creux (6) et de la deuxième moitié d'embrayage (5)) se terminant par un alésage et réalisant l'isolation électrique du premier cylindre creux (6) et de la deuxième moitié d'embrayage (5).

13. Procédé de fabrication d'un embrayage (1) selon l'une des revendications précédentes, au moins deux moitiés d'embrayage (4, 5) étant fabriquées et au moins une deuxième moitié d'embrayage (5) étant fabriquée à partir d'au moins deux cylindres creux (6, 8) disposés l'un au-dessus de l'autre,
le premier cylindre creux (6) et la deuxième moitié d'embrayage (5) étant tout d'abord fabriqués à partir d'une matière électriquement conductrice, puis un alésage étant ménagé dans la deuxième moitié d'embrayage (5), lequel réalise un agencement parallèle de la deuxième moitié d'embrayage (5) par rapport à l'axe de rotation de l'arbre d'entraînement ou de sortie (2, 3), au moins la surface latérale extérieure du premier cylindre creux (6) et la surface latérale intérieure de la deuxième moitié d'embrayage (5) étant pourvues de moletages (7, 9) dans la région de l'alésage, puis le deuxième cylindre creux (8) en la matière électriquement isolante étant introduit dans l'espace situé entre le premier cylindre creux (6) et l'alésage de la deuxième moitié d'embrayage (5) avec contact complet au moins par complémentarité de formes.

14. Procédé selon la revendication 13, le moletage (7, 9) étant réalisé par striage, pressage, filetage, tournage, fraisage ou gaufrage sur les surfaces latérales du premier cylindre creux (6) et de la deuxième moitié d'embrayage (5).

15. Procédé selon la revendication 13, la matière électriquement isolante du deuxième cylindre creux (8) étant introduite sous forme solide, pâteuse, liquide ou fondue ou la matière électriquement isolante du deuxième cylindre creux (8) étant une matière polymère, telle qu'un élastomère, une matière thermodurcissable ou une matière thermoplastique.

16. Procédé selon la revendication 13, la matière du deuxième cylindre creux (8) étant pressée ou injectée dans l'espace situé entre le deuxième cylindre creux (8) et la deuxième moitié d'embrayage (5).
